# EUROPEAN PATENT APPLICATION

(11) **EP 1 544 712 A2**
(43) Date of publication of application: **22.06.2005**
(21) Application number: 04257896.3
(22) Date of filing: 17.12.2004
(51) Int. Cl.: G06F 1/00

(54) **A method and apparatus to manage digital rights**

(30) Priority: 19.12.2003 US 741135
(71) Applicant: Openwave Systems Inc., Redwood City, CA 94063 (US)
(72) Inventor: Choudhary, Nitu, Cupertino CA 95014 (US)
(74) Representative: Butler, Michael John

(57) **Abstract**

In one embodiment, the invention provides a method for handling a digital rights protected object. In the method a digital rights protected object is received, and thereafter, digital rights information associated with the object is separated from content associated with the object. The digital rights information is stored in a digital rights information repository, whereas the content is stored in a content repository. A digital rights handle is created to link the digital rights information to the content and a digital rights management module is provided, which can be created by an application to determine if a digital rights restriction exists for content that prevents usage of the content.

## Description

### FIELD OF THE INVENTION

This invention relates to digital rights management. In particular, the invention relates to a method and apparatus for handling a digital rights protected object.

### BACKGROUND

Digital content such as software, music, games, images, etc., can be easily shared in a manner that violates any digital rights, such as copyright, associated with the content. For example, content can be shared over the Internet in violation of copyright, or content can be copied onto a compact disc (CD) or digital versatile disc (DVD) in violation of copyright.

In order to control unauthorized use of digital content, some content providers have included digital rights information in the form of headers associated with the content.

The content and the headers may be downloaded to a device such as a mobile telephone and stored therein. Each time an application or content player attempts to use the content, the digital rights in the headers are checked for restrictions on the use, and only if no restrictions exist, is the use of the content allowed.

One problem with the above approach to digital rights management is that the content and the headers are bundled together and may not be unbundled. This restriction on unbundling may be inconvenient in the case of a complex object that has multiple content components that a user wishes to use separately. An example of such a complex object may include a multi-media message (MMS) greeting card such as a birthday card. The birthday card may have a graphic component, a sound component, and a text component. The user receiving the greeting card may wish to unbundle the card so that the graphic component could be used as a screen saver or as wallpaper and the sound object may be played independently of the greeting card. However, the user will be prevented from unbundling or separating out the components because of the restriction on unbundling.

Another problem with existing digital rights management techniques is that they do not allow multiple copies of a digital rights protected object to be made. This is because when the protected object is copied, the bundled digital rights are also copied, thus making it possible to use each copy of the protected object independently of the other copies. This could lead to a violation of the digital rights associated with the object. For example, the object may be protected by a ten use license. By making multiple copies, each copy will have a separate ten use license, in effect permitting use of the object in excess of ten uses.

### SUMMARY OF THE INVENTION

In one embodiment, the invention provides a method for handling a digital rights protected object. In the method a digital rights protected object is received. Thereafter, digital rights information associated with the object is separated from content associated with the object. The digital rights information is stored in a digital rights information repository, whereas the content is stored in a content repository. A digital rights handle is created to link the digital rights information to the content and a digital rights management module is provided, which can be queried by an application to determine if a digital rights restriction exists for content that prevents usage of the content.

### BRIEF DESCRIPTION OF THE DRAWINGS

Figure 1 shows an example of a complex digital rights protected object;

Figures 2A, 2B, and 2C show examples of rights objects;

Figure 3 shows a high level block diagram of a device in accordance with one embodiment of the invention;

Figure 4 shows a flowchart of operations performed by the device of Figure 3 when handling a digital rights protected object in accordance with one embodiment of the invention;

Figure 5 shows a memory organization for the device of Figure 3, in accordance with one embodiment of the invention; and

Figures 6 and 7 show flowcharts of operations performed by the device of Figure 3 when handling digital rights protected objects in accordance with one embodiment of the invention.

### DETAILED DESCRIPTION OF THE DRAWINGS

In the following description, for purposes of explanation, numerous specific details are set forth in order to provide a thorough understanding of the invention. It will be apparent, however, to one skilled in the art that the invention can be practiced without these specific details. In other instances, structures and devices are shown in block diagram form in order to avoid obscuring the invention.

Reference in this specification to "one embodiment" or "an embodiment" means that a particular feature, structure, or characteristic described in connection with the embodiment is included in at least one embodiment of the invention. The appearances of the phrase "in one embodiment" in various places in the specification are not necessarily all referring to the same embodiment, nor are separate or alternative embodiments mutually exclusive of other embodiments. Moreover, various features are described which may be exhibited by some embodiments and not by others. Similarly, various requirements are described which may be requirements for some embodiments but not other embodiments.

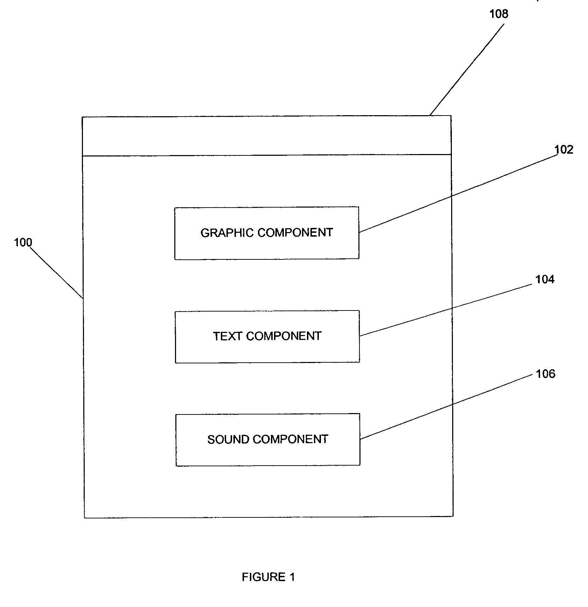

Referring now to Figure 1 of the drawings, there is shown an example of a complex digital rights protected object 100. As will be seen, the object 100 includes multiple content components in the form of a graphic component 102, a text component 104, and a sound component 106 that together define, e.g., an electronic greeting card. The object 100 has associated therewith, digital rights information in the form of a header 108. By way of example, the digital rights information may include a "play parameter" that controls a number of times or duration for which a content object may be played; a "display" parameter that controls the number of times/duration for which an image may be displayed; an "execute" parameter that controls the number of times/duration for which an application may be executed; a "print" parameter that controls the number of times/duration for which content may be printed; a "forward" parameter that controls whether an object may be forwarded to another user/device; a "store" parameter that controls where an object may be stored; and a "peripheral" parameter that controls whether an object may be forwarded to a peripheral device.

Further, the digital rights information may include restrictions or constraints on the usage of the associated object. These restrictions may include a "count" restriction that controls the numbers of times an object may be used; a "date-time" restriction that defines a start and an end date when an object can be used; and an "interval" restriction that controls the total time for which an object may be used from the time that the object is downloaded. For example, if the interval description is set for three months and the object was downloaded on 1 January 2004, the object can be validly used until 31 March 2004. In another embodiment, the interval restriction may define the total time for which an object may be used, from the date when the object was first used. For example, if the interval restriction is set to three months and the object was downloaded on 1 January 2004, and was first used on 1 February 2004, the object may be validly used until 30 April 2004. In another embodiment, the interval restriction defines the total cumulative time for which an object may be used. For example, if the interval restriction is set to three months and the object was first downloaded on 1 January 2004, the object may be used for, say, ten hours on 1 January, five hours on 16 January, two hours on 8 March, eight hours on 14 April, and so on, until the cumulative time during which the object was used equals three months.

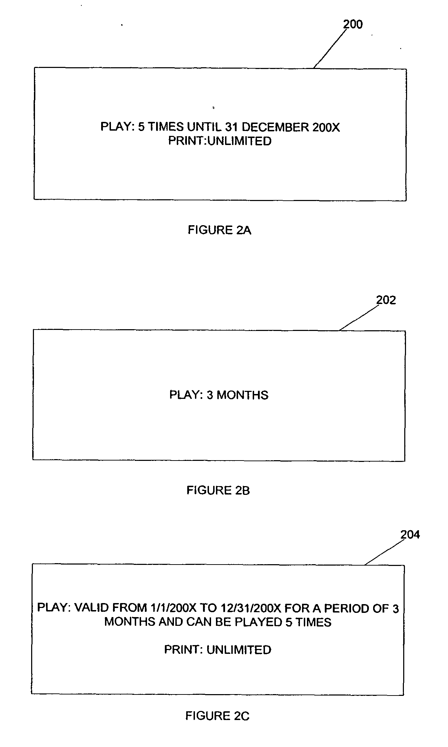

In one embodiment, the digital rights information may take form of 0 to N rights object. Each rights object may specify copyright attributes and constraints associated with content. Examples of rights objects include the rights object 200 shown in Figure 2A of the drawings that places play constraints on an associated object; the rights object 202 shown in Figure 2B of the drawings that places a play constraint on an associated protected object; and the rights object 204 shown in Figure 2C that places a play and a print restriction on an associated protected object.

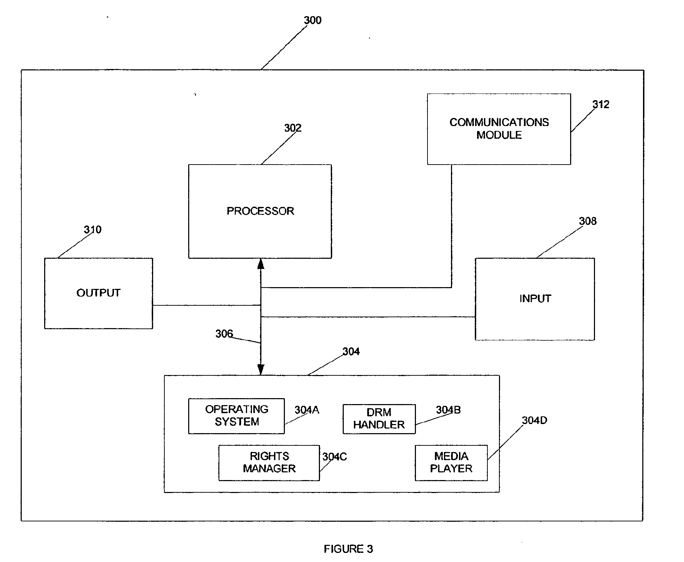

Figure 3 shows a high-level block diagram of a device 300 that may be used to handle the digital rights protected object 100, in accordance with one embodiment of the invention. As will be seen, the device 300 includes a microprocessor 302, which is coupled to a memory 304 via a communications path 306 which may include a bus. The device also includes an input mechanism 308 and an output mechanism 310. According to different embodiments, the input mechanism 308 may comprise a keypad, e.g., if the device 300 is in the form of a mobile telephone, or a keyboard, e.g., if the device 300 is in the form of a general purpose computer. The output mechanism 310 may comprise a display screen and peripheral devices such as a printer. Also coupled to the processor 302 is a communications module 312 which includes circuitry to enable the device 300 to communicate with other devices over a network, e.g., a local area network (LAN) or a wide area network such as the Internet. The communications module 312 may include circuitry to enable communications over a wired medium as well as circuitry to enable communications over a wireless medium. The memory 304 represents various memory technologies such as random access memory (RAM) devices, read only memory (ROM) devices, cache memory devices, etc. The memory devices that make up the memory module 304 may, in some embodiments, reside physically within other components of the device 300, e.g., within the processor 302.

As will be understood by one skilled in the art, the memory 304 includes software components to enable operation of the device 304. Thus, for example, the memory 304 includes an operating system 304A, which provides an interface to the components of the device 300 to various application programs/software that run on the device 300. In accordance with one embodiment of the invention, the software includes a digital rights management (DRM) handler 304B and a rights manager 304C.

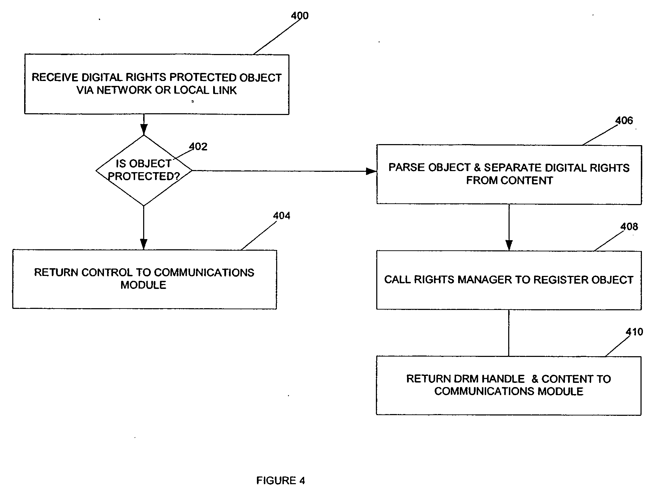

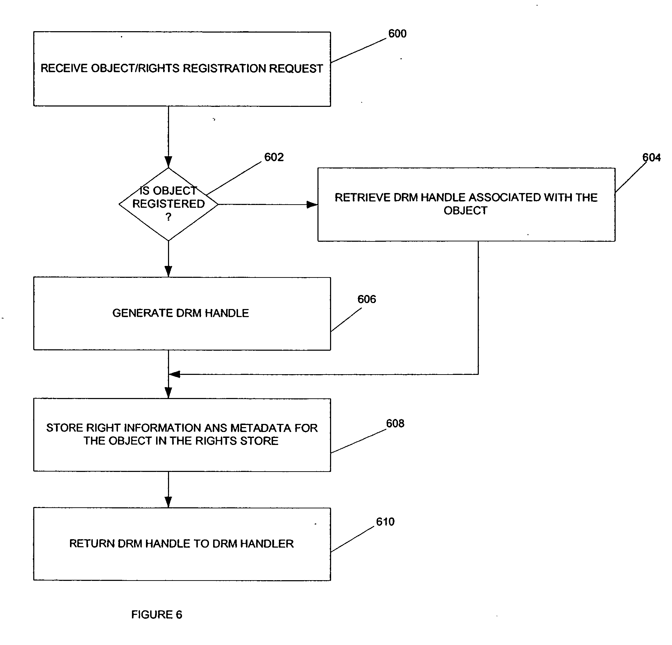

Figure 4 of the drawings shows flowcharts of operations performed by the device 300, in accordance with one embodiment of the invention, when handling a digital rights protected object. At block 400, the device 300 receives a digital rights protected object such as the object 100 of Figure 1 of the drawings, via the communications module 312. The protected object is sent to the DRM handler 304B, which determines if the object is protected. If the object is not protected, then at block 404 the DRM handler 304B returns control to the communications module 312, indicating that the object is not protected. If at block 402, the DRM handler 304B determines that the object is protected then control passes to block 406, where the DRM handler 304B parses the object and separates the digital rights information associated with the object from content associated with the object. For example, if the object were the object 100 shown in Figure 1 of the drawings, then at block 406, the DRM handler 304B extracts the digital rights information from the header associated with the object 100. At block 408, the DRM handler 304B calls the rights manager 304C to register the object with the rights manager 304C. The rights manager 304C registers the object and returns a DRM handle for the object, as will be explained with reference to Figure 6 of the drawings. The DRM handle is an internal representation of digital rights information associated with the object. In one embodiment, the DRM handle comprises a 32-byte integer value, wherein bits 0 to 7 contain bits to represent digital rights information, for example, a particular copyright solution, bits 8 to 15 contain a name of the DRM algorithm used to protect the object; and bits 16 to 31 contain an object identifier or id to uniquely identify the object. In other embodiments the DRM handler may simply be a unique number. At block 410, the DRM handler 304B returns the DRM handle and the content associated with the object to the communications module 312. In some embodiments, the DRM handler 304B may encrypt the content before returning the content to the communications module 312, so that the content can only be accessed by a trusted application.

The DRM handle for the object serves as a link between the digital rights associated with the object and the actual content associated with the object. Through the mechanism of the DRM handle, it is possible to separately store the content and the digital rights information, as will be explained in greater detail below. Further, through the mechanism of the DRM handle, it is possible to allow multiple copies of the object to be stored at different locations within the memory 304 while at the same time accounting for each use of the object in accordance with the digital rights information associated with the object, as will be explained in greater detail below.

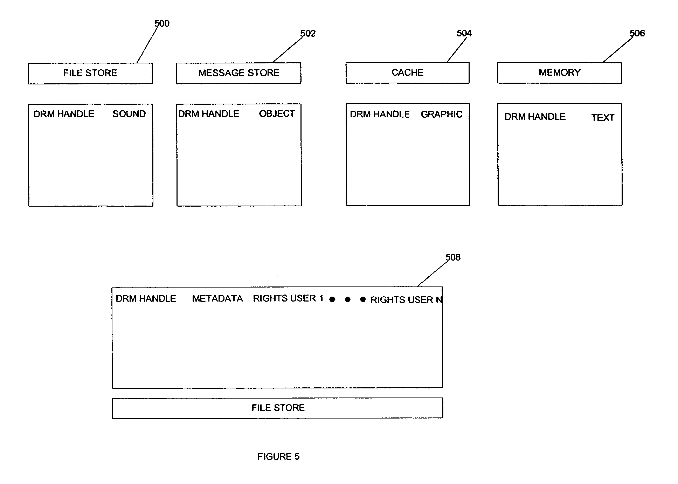

Figure 5 of the drawings shows a memory organization for the memory module 304, in accordance with one embodiment of the invention that has relevance in the case where device 300 comprises a mobile telephone. Referring to Figure 5, it will be seen that the memory module 304 is partitioned into memory areas comprising a file store 500, a cache 502, a general memory area 504, a message store 506, and a rights store 508. Each of the memory areas 500 to 506 may be used to store actual content associated with an object and a DRM handle (or object id) associated with the content. For example, in one embodiment, the message store 502 may be used to store a DRM handle (or object id) for the object 100 as well as the actual content for the object 100. In this example, the cache 502 may be used to store only the graphic component 106 of the object 100 and the DRM handle (or object id). The memory 504 may be used to store only the text component of the object and the DRM handle (or object id), and the file store 500 may be used to store only the sound component of the object and the DRM handle (or object id). The rights store 508 is used to store digital rights information associated with the object and includes an entry for the DRM handle (or object id) of the object. The entry includes metadata that describes the digital rights associated with the object and the digital rights associated with each of rights users 1 to N. Since the rights are organized per user, multiple users of the device 300 can independently use an object without consuming the rights of another user for the same object.

The rights manager 304C is responsible for storing and managing constraints/restrictions associated with content. The constraint/restrictions are stored in the rights store 508 along with the metadata and cannot be accessed by any other application.

Figure 6 shows a flowchart of operations performed by the rights manager 304C in accordance with one embodiment of the invention. Referring to Figure 6, at block 600 the rights manager 304C receives an object/rights registration request from the DRM handler 304B. At block 602, the rights manager 304C determines if the object has already been registered. If the object has already been registered then at block 604, the rights manager retrieves the DRM handle (or object id) associated with the object, otherwise at block 606, the rights manager generates a DRM handle for the object. At block 608, the rights manager 304C stores the rights information and metadata for the object in the right store 508. At block 610, the rights manager 304C returns the DRM handle to the DRM handler 304B.

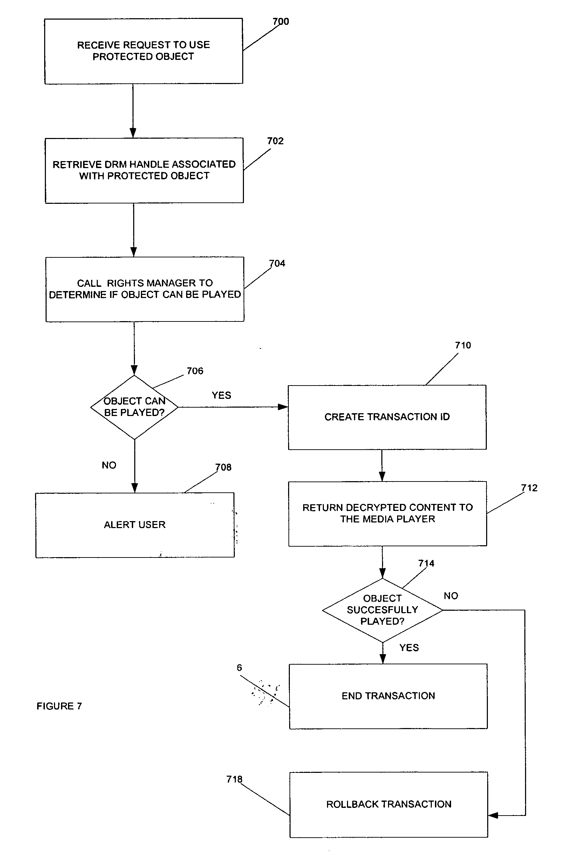

Referring now to Figure 7 of the drawings, there is shown a flowchart of operations performed when the media player 304D is invoked in order to play a protected object. Referring to Figure 7, at block 700, the media player 304D receives a request to use or "play" a protected object. At block 702, the media player 304D retrieves the DRM handle associated with the protected object. At block 704, the media player 304D calls the rights manager 304C to determine if the object can be played without a violation of any digital rights associated with the object. The rights manager 304C checks the rights associated with the object in the rights store and determines if use of the object by the media player is permitted in terms of any digital rights restrictions that may exist for the object. If, at block 706, information from the rights manager 304 indicates that the object may not be played without a violation of a restriction then at block 708 the media player alerts the user of this condition. If, however, at block 706 the information from the rights manager 304C indicates that the media player may use the object without any violation of any rights associated with the object, then at block 710, a transaction identifier or id associated with the request to play the object is created by the rights manager 304C. At block 712 the rights manager 304C to returns decrypted content to the for the media player 304D for playing. At 712, the media player 304D determines if the object was successfully played. At 714, if the object was successfully played, then a call is made to the rights manager 304C to end the transaction, otherwise at block 716, a call is made to the rights manager 304C to roll back the transaction. The ability to roll back a transaction if an object was not successfully played or used ensures that the rights of a user are consumed if the object was not successfully played.

In some cases, content distribution may follow a separate delivery model in which content and the rights associated with the content are delivered separately to a device. Usually, the content is delivered to the device in encrypted form, thus preventing any hackers from freely accessing the content. The constraints or digital rights associated with the content are delivered to the device, e.g., over a push channel, together with a key to decrypt the content. The techniques described herein are equally applicable to content distributed using the separate delivery model. In this case, the digital rights manager 304C associates the same digital rights handle with content that is received by separate delivery and the digital rights corresponding to the content, which is received, e.g., over a push channel.

Although the present invention has been described with reference to specific exemplary embodiments, it will be evident that the various modification and changes can be made to these embodiments without departing from the broader spirit of the invention as set forth in the claims. Accordingly, the specification and drawings are to be regarded in an illustrative sense rather than in a restrictive sense.

In general, the routines executed to implement the embodiments of the invention, may be implemented as part of an operating system or a specific application, component, program, object, module or sequence of instructions referred to as "computer programs." The computer programs typically comprise one or more instructions set at various times in various memory and storage devices in a computer, and that, when read and executed by one or more processors in a computer, cause the computer to perform operations necessary to execute elements involving the various aspects of the invention. Moreover, while the invention has been described in the context of fully functioning computers and computer systems, those skilled in the art will appreciate that the various embodiments of the invention are capable of being distributed as a program product in a variety of forms, and that the invention applies equally regardless of the particular type of signal bearing media (computer-readable media) used to actually effect the distribution. Examples of signal bearing media include but are not limited to recordable type media such as volatile and non-volatile memory devices, floppy and other removable disks, hard disk drives, optical disks (e.g., Compact Disk Read-Only Memory (CD ROMS), Digital Versatile Disks, (DVDs), etc.), among others, and transmission type media such as digital and analog communication links.

## Claims

1. A method for handling a digital rights protected object, the method comprising:
separating digital rights information associated with the object from content associated with the object; and
providing a mechanism for an application to determine if a digital rights restriction exists for the content based on the digital rights information.

2. The method of claim 1, further comprising permitting multiple copies of the content to be made.

3. The method of claim 1, wherein providing the mechanism comprises creating a digital rights handle to link the digital rights information to the content.

4. A method as claimed in claim 1 or 2, further comprising the initial step of receiving the protected object; and wherein said mechanism to determine if a digital rights restriction exists comprises the steps of:
storing the digital rights information in a digital rights information repository;
storing the content in a content repository;
creating a digital rights handle to link the digital rights information to the content; and
providing a digital rights management module that can be queried by the application to determine if a digital rights restriction exists for the content that prevents usage of the content.

5. The method of claim 4, wherein the content repository is a first content repository, the method further comprising storing the digital rights information within a second digital rights repository, and linking the content in the second content repository to the digital rights information through the digital rights handle.

6. The method of claim 4, wherein the digital rights management module updates the digital rights information based on information received from an application that uses the content.

7. The method of claim 6, wherein updating the digital rights information comprises updating a usage counter for the content.

8. A method as claimed in claim 1, the method comprising:
storing digital rights information associated with the object within a digital rights information repository;
allowing a user to unbundle the object into content components, wherein each content component is stored separately;
linking each content component to the digital rights information through a digital rights handle; and
restricting a use of each content component by the application based on a restriction contained in the digital rights information.

9. The method of claim 8, wherein allowing the user to unbundle the object comprises allowing the user to make multiple copies of a content component, wherein each copy of the content component is linked to the digital rights information through the digital rights handle.

10. The method of claim 8, wherein restricting the use of each content component comprises providing the restriction to the application in response to a request from the application.

11. A device for handling a digital rights protected object, arranged to carry out a method as claimed in any preceding claim.

12. A computer readable medium, having stored thereon a sequence of instructions, which when executed by a processor, cause the processor to perform the method for handling a digital rights protected object, as claimed in any of claims 1 to 10.

13. A method for handling a digital rights protected object, the method comprising:
receiving the protected object;
separating digital rights information associated with the object from content associated with the object;
storing the digital rights information in a digital rights information repository;
storing the content in a content repository;
creating a digital rights handle to link the digital rights information to the content; and
providing a digital rights management module that can be queried by an application to determine if a digital rights restriction exists for the content that prevents usage of the content.

14. A method for handling a digital rights protected object, the method comprising:
storing digital rights information associated with the object within a digital rights information repository;
allowing a user to unbundle the object into content components, wherein each content component is stored separately;
linking each content component to the digital rights information through a digital rights handle; and
restricting a use of each content component by an application based on a restriction contained in the digital rights information.

15. A device for handling a digital rights protected object, the device comprising:
a mechanism to separate digital rights information associated with the object from content associated with the object; and
a mechanism to determine if a digital rights restriction exists for content based on the digital rights information.

16. A device for handling a digital rights protected object, the device comprising:
a processor; and
a memory coupled to the processor, the memory storing instructions which digital rights object when executed by the processor cause the device to perform a method comprising:
receiving the protected object;
separating digital rights information associated with the object from content associated with the object;
storing the digital rights information in a digital rights information repository;
storing the content in a content repository;
creating a digital rights handle to link the digital rights information to the content; and
providing a digital rights management module that can be queried by an application to determine if a digital rights restriction exists for the content that prevents usage of the content.

17. A device for handling a digital rights protected object, the device comprising:
a processor; and
a memory coupled to the processor, the memory storing instructions which when executed by the processor, cause the device to perform a method comprising:
storing digital rights information associated with the object within a digital rights information repository;
allowing a user to unbundle the object into content components, wherein each content component is stored separately;
linking each content component to the digital rights information through a digital rights handle; and
restricting a use of each content component by an application based on a restriction contained in the digital rights information.

18. A computer readable medium, having stored thereon a sequence of instructions, which when executed by a processor, cause the processor to perform a method for handling a digital rights protected object, the method comprising:
receiving the protected object;
separating digital rights information associated with the object from content associated with the object;
storing the digital rights information in a digital rights information repository;
storing the content in a content repository;
creating a digital rights handle to link the digital rights information to the content; and
providing a digital rights management module that can be queried by an application to determine if a digital rights restriction exists for the content that prevents usage of the content.

19. A computer readable medium, having stored thereon a sequence of instructions which when executed by a computer, cause the computer to perform a method for handling a digital rights protected object, the method comprising:
storing digital rights information associated with the object within a digital rights information repository;
allowing a user to unbundle the object into content components, wherein each content component is stored separately;
linking each content component to the digital rights information through a digital rights handle; and
restricting a use of each content component by an application based on a restriction contained in the digital rights information.
